# EUROPEAN PATENT APPLICATION

(11) **EP 4 144 489 A1**
(43) Date of publication of application: **08.03.2023**
(21) Application number: 21795787.7
(22) Date of filing: 05.03.2021
(51) Int. Cl.: B25J 13/00, G06F 3/048

(54) **CONTROL DEVICE, CONTROL METHOD, AND COMPUTER PROGRAM**

(30) Priority: 28.04.2020 JP 2020078877
(71) Applicant: Sony Group Corporation, Minato-Ku, Tokyo, 108-0075 (JP)
(72) Inventor: SAIJO, Hiroki, Tokyo 108-0075 (JP); SODEYAMA, Yoshinao, Tokyo 108-0075 (JP); VAHEERDEN, Kirill, Tokyo 108-0075 (JP); KAWANAMI, Yasunori, Tokyo 108-0075 (JP); KAMADA, Rui, Tokyo 141-0022 (JP); NISHIMURA, Naoki, Tokyo 108-0075 (JP)
(74) Representative: 2SPL Patentanwälte PartG mbB
(86) International application number: PCT/JP2021/008799
(87) International publication number: WO 2021/220614

(57) **Abstract**

A control device that controls an operation of a robot for alerting a human is provided.

A control device that controls a robot includes an acquiring unit that acquires field of view information of a human and a control unit that controls an operation of an alert unit provided on the robot based on the field of view information. The control unit controls the alert unit such that the alert unit performs an alert operation according to a target task of the robot within an auxiliary field of view area of the human. The alert unit includes a manipulator provided on the robot. The alert operation includes an operation of the manipulator gripping an object relating to the target task of the robot.

## Description

### [Technical Field]

A technology disclosed in the present specification (hereinafter referred to as "the present disclosure") relates to a control device, a control method, and a computer program that control an operation of a robot.

### [Background Art]

In recent years, robots that automatedly operate in human living spaces for the purpose of life support and long-term care have become widespread. Such a type of robot is equipped, for example, with an arm or a manipulator to pass and receive an object to and from a human or to enter the field of view of the human and touch the body of the human to alert the human. In this way, a robot needs to perform various tasks in an area close to a human, but when performing tasks, it may be annoying to interrupt a human who is doing a certain action and it may be dangerous to inadvertently approach a human.

For example, a mobile robot that generates an action such that a human is not aware of its existence except when the human pays attention has been proposed (see PTL 1). This mobile robot defines an exclusive space for a human and sets a target such that the mobile robot is located outside the area. The mobile robot determines the situation of an action of the human and does not disturb the action on a target landmark. In short, the mobile robot can achieve the purpose of not making humans aware of its existence basically by limiting its range of movement. However, when a robot supports human life or the like, it may be necessary to make humans aware of its existence, for example, by alerting them.

### [Citation List]

### [Patent Literature]

[PTL 1]
JP 2008-246665A

### [Summary]

### [Technical Problem]

An object of the present disclosure is to provide a control device, a control method, and a computer program that control an operation of a robot for alerting a human.

### [Solution to Problem]

The present disclosure has been made in view of the above problems and a first aspect of the present disclosure is a control device that controls a robot, the control device including an acquiring unit configured to acquire field of view information of a human and a control unit configured to control an operation of an alert unit provided on the robot based on the field of view information.

The control unit controls the alert unit such that the alert unit performs an alert operation according to a target task of the robot within an auxiliary field of view area of the human.

The alert unit includes a manipulator provided on the robot. The alert operation includes an operation of the manipulator gripping an object relating to the target task of the robot.

The control unit checks an effect of the alert operation performed by the alert unit. Then, the control unit controls execution of a task of the robot associated with the alert operation when the alert operation performed by the alert unit is effective.

A second aspect of the present disclosure is a control method of controlling a robot, the control method including an acquiring step of acquiring field of view information of a human and a control step of controlling an operation of an alert unit provided on the robot based on the field of view information.

A third aspect of the present disclosure is a computer program written in a computer-readable format to execute processing for controlling a robot on a computer, the computer program causing a computer to function as an acquiring unit configured to acquire field of view information of a human and a control unit configured to control an operation of an alert unit provided on the robot based on the field of view information.

The computer program according to the third aspect of the present disclosure defines a computer program written in a computer-readable format to implement predetermined processing on the computer. That is, installing the computer program according to the third aspect of the present disclosure on the computer can implement collaborative operations on the computer, achieving the same operations and effects as the control device according to the first aspect of the present disclosure.

### [Advantageous Effects of Invention]

According to the present disclosure, it is possible to provide a control device, a control method, and a computer program that control an operation of a robot for alerting a human without interfering with an action of the human.

The effects described in the present specification are merely examples and effects achieved by the present disclosure are not limited thereto. The present disclosure may have additional effects in addition to the above effect.

Other objectives, features and advantages of the present disclosure will be apparent from the following embodiments and more detailed description based on accompanying drawings.

### [Brief Description of Drawings]

[Fig. 1]

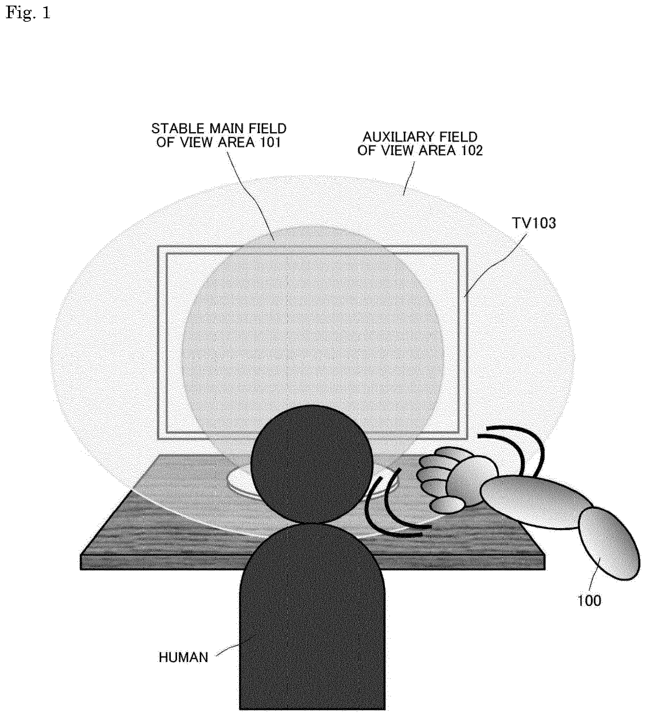

   Fig. 1 is a diagram showing how a robot arm 100 is used to provide an alert within an auxiliary field of view of a human who is watching TV.
[Fig. 2]

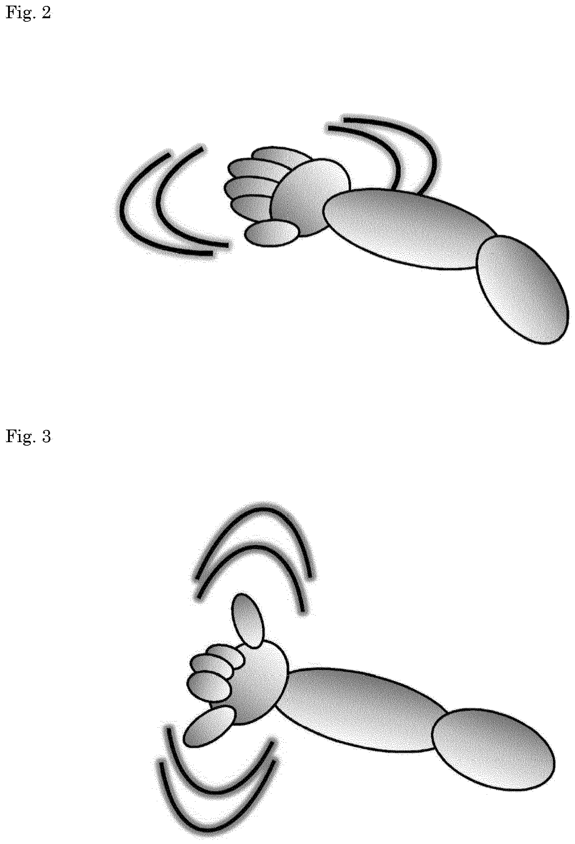

   Fig. 2 is a diagram illustrating a movement pattern for alerting according to a target task of a manipulator.
[Fig. 3]
   Fig. 3 is a diagram illustrating a movement pattern for alerting according to a target task of the manipulator.
[Fig. 4]

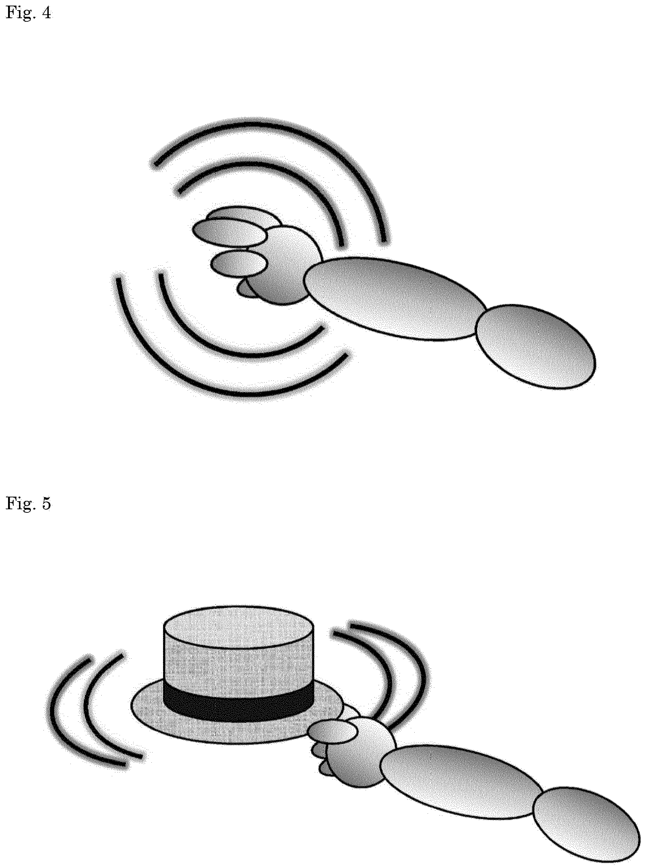

   Fig. 4 is a diagram illustrating a movement pattern for alerting according to a target task of the manipulator.
[Fig. 5]
   Fig. 5 is a diagram illustrating a movement pattern for alerting according to a target task of the manipulator.
[Fig. 6]

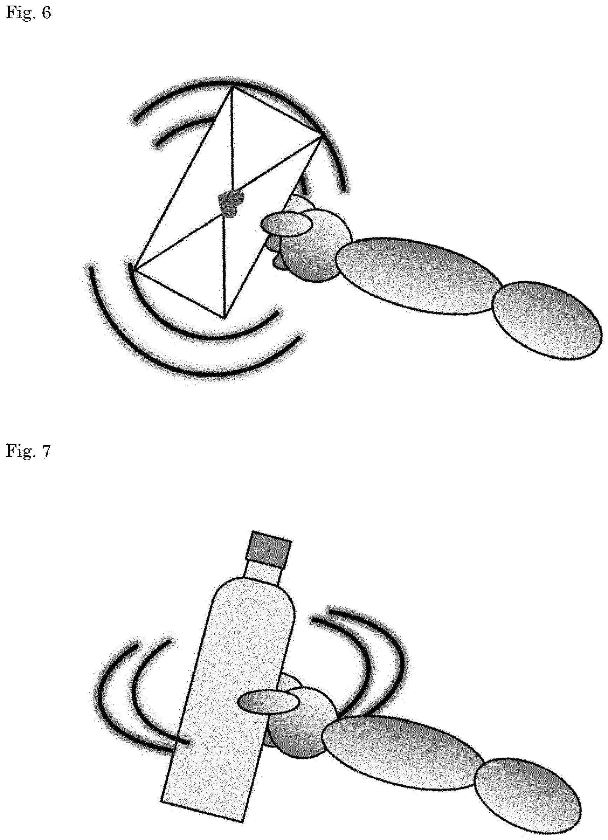

   Fig. 6 is a diagram illustrating a movement pattern for alerting according to a target task of the manipulator.
[Fig. 7]
   Fig. 7 is a diagram illustrating a movement pattern for alerting according to a target task of the manipulator.
[Fig. 8]

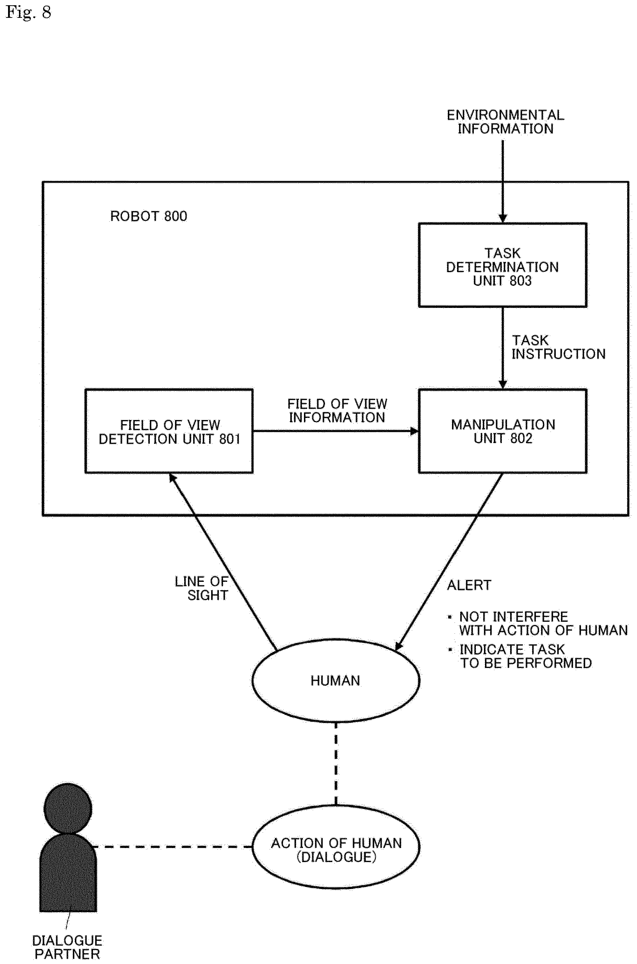

   Fig. 8 is a diagram showing an exemplary device configuration in which a robot performs an alert operation for performing a task based on a result of field of view detection performed by the robot alone.
[Fig. 9]

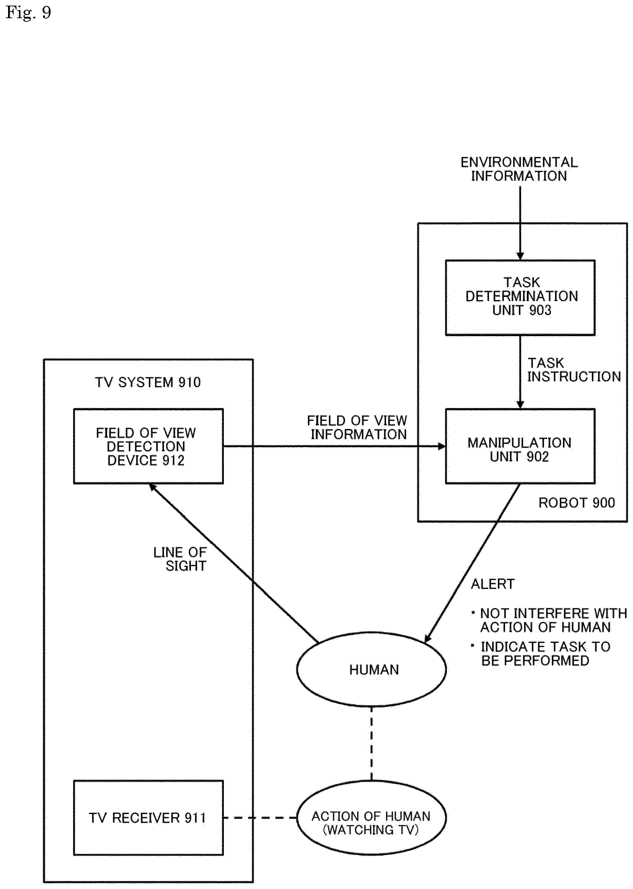

   Fig. 9 is a diagram showing an exemplary device configuration in which a robot performs an alert operation for performing a task based on a result of field of view detection performed in cooperation with an external device.
[Fig. 10]

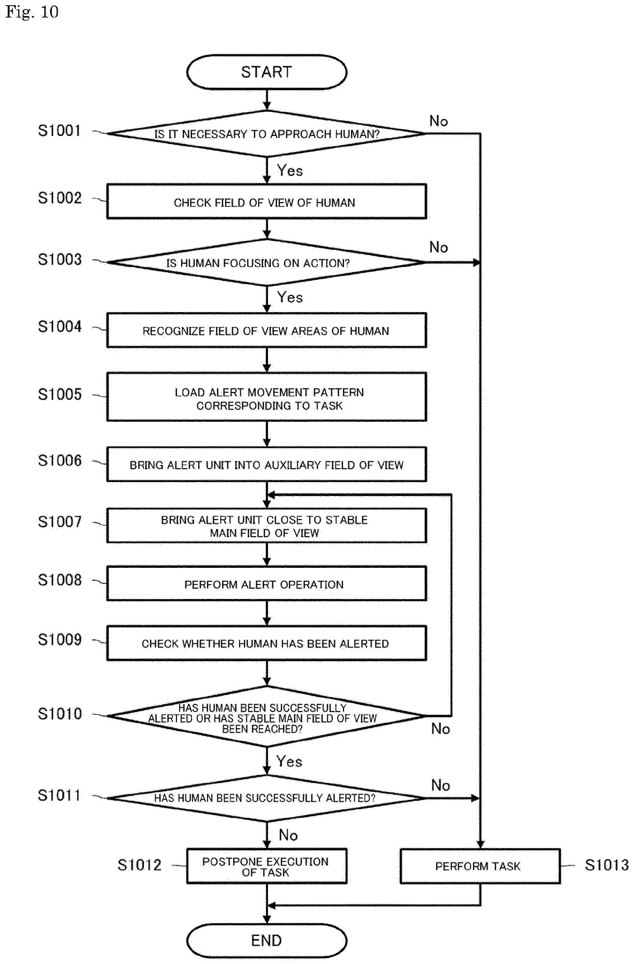

   Fig. 10 is a flowchart showing an operation procedure when a robot performs a task.
[Fig. 11]

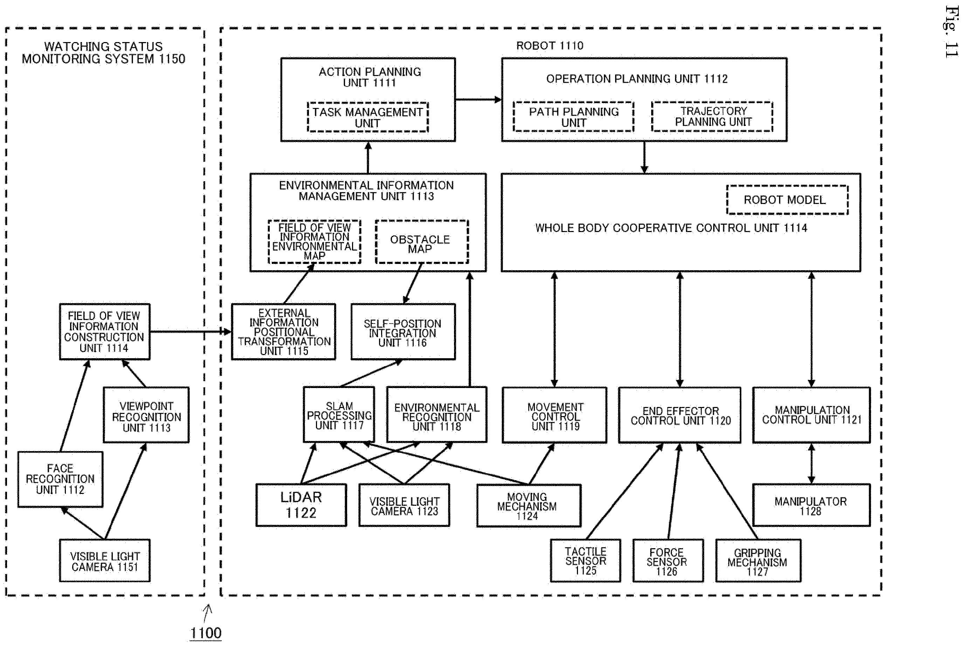

   Fig. 11 is a diagram showing an exemplary configuration of an action planning system 1100 in which it is reflected in an action plan of the robot.

### [Description of Embodiments]

Hereinafter, a technology relating to the present disclosure will be described with reference to the drawings in the following order.
A. Life support by robot
B. Means for alerting
C. Device for detecting line of sight
C-1. Implementation of device for detecting line of sight
C-2. Determination of watching status
C-3. Implementation of device for detecting line of sight with robot alone
D. Device configuration
E. Operation flow
F. System configuration in which field of view information is integrated into environmental information

### A. Life support by robot

The present disclosure mainly applies to a control device that controls the operation of a robot that supports life in a living space of a human. It is an object of the present disclosure to control the operation of a robot to perform a task such that a human is alerted without interfering with an action of the human.

Here, an environment in which the robot performs human life support activities is an environment in which a plurality of humans are freely active and includes, for example, nursing care facilities. Of course, the environment may also include an ordinary household, a school, an office, or a factory.

Tasks performed by the robot are basically tasks for supporting human life and include, for example, "cleaning," "decluttering," and "guidance." Of course, tasks may also include tasks that do not directly relate to human life support. It is assumed that the robot performs a plurality of types of tasks, and in the present embodiment, it is assumed that a priority is set for each task. Robot tasks have a lower priority than human actions, except for tasks relating to safety and tasks that encourage humans to take other actions. Basically, the robot has to perform a task such that it does not interfere with the free action of humans.

For example, the robot uses a long-handled mop to perform the task "cleaning." When wiping the floor with a mop in front of a TV receiver, the robot does not enter the area in front of the TV receiver and stretches the mop to wipe it, thereby performing the task "cleaning" without interfering with TV watching of a human.

It is assumed that tasks performed by the robot include those for the cases where it is assumed that it is necessary to approach a human. One example is that for the case of serving to a human who is watching TV at a dining table.

When performing a task in which a human is approached, the robot needs to perform the task such that it does not inadvertently approach the human and surprise the human or it does not disturb an action that the human is performing (for example, watching TV). Thus, it is preferable that the robot provide an appropriate alert when approaching a human to perform a task.

### B. Means for alerting

The present disclosure is characterized in that an alert is provided by an operation of a robot within an auxiliary field of view of a human. Fig. 1 shows how the robot uses the manipulator 100 to provide an alert within the auxiliary field of view of a human who is watching a TV show displayed on the TV receiver 103.

Field of view areas of the human include a stable main field of view area 101 that is an area in which information can be identified and an auxiliary field of view area 102 that is further outside the stable main field of view area 101. The stable main field of view area 101 is an area in which a human can gaze at an object with a movement of the head without difficulty. On the other hand, the auxiliary field of view area 102 is an area in which the ability to identify information about an object is lower than that of the stable main field of view area 101 but it is possible to perceive the presence of something.

For example, if the robot 100 interrupts the stable main field of view area 101 in which the ability to identify information is high to provide an alert, this will interfere with TV watching of the human, giving a strong discomfort. On the other hand, if an alert is provided using the auxiliary field of view area 102 in which the ability to identify information is low, the human can recognize that something is being prompted by the robot while continuing to watch TV.

In order to use the auxiliary field of view to alert the human, the robot needs to recognize the auxiliary field of view of the human. In the present embodiment, the auxiliary field of view is recognized based on detection of the line of sight of the human. Of course, the auxiliary field of view may also be recognized using other means.

For example, the robot may estimate the line of sight based on a result of recognizing the posture of the human. Line of sight detection information may also be acquired from a device external to the robot. For example, a visible light camera or an infrared camera can be installed on a TV receiver or the like to detect the line of sight. Because the face of the human who is watching a TV show faces the screen, the line of sight of the human can be reliably detected using the camera installed on the TV receiver.

When providing an alert in the auxiliary field of view of the human, the robot can communicate a target task of the robot to the human by selectively using a "movement pattern" or a "gripped object" (when providing the alert using the manipulator) in the auxiliary field of view area according to the target task. The human can understand the target task of the robot based on an alert operation of the robot performed in the auxiliary field of view area. Then, the robot can smoothly perform the task with the cooperation of the human.

For example, when performing a task such as "wiping," "informing of an incoming call," "serving," "encouraging to go for a walk," "delivering a letter," and "hydration," a robot equipped with a manipulator performs an alert operation to indicate the target task through a movement pattern as shown in Figs. 2 to 7 or a combination of a movement pattern and a gripped object. Fig. 2 illustrates a movement pattern of the manipulator that simulates the task "wiping." Fig. 3 illustrates a movement pattern of the manipulator that simulates the task "informing of an incoming call." Fig. 4 illustrates a movement pattern of the manipulator that simulates the task "serving." Fig. 5 illustrates a movement pattern of the manipulator that simulates the task "encouraging to go for a walk" by gripping a hat used when going for a walk. Fig. 6 illustrates a movement pattern of the manipulator that simulates the task "delivering a letter" by holding an envelope. Fig. 7 illustrates a movement pattern of the manipulator that simulates the task "hydration" by gripping a PET bottle. When the manipulator performs an operation of gripping an object relating to each task as shown in Figs. 5 to 7, the human who has observed the operation can easily associate it with a target task of the robot.

For example, movement parameters (such as command values to joint actuators) for implementing an alert operation that indicates a task are defined in advance in association with each task performed by the robot. If there is a nearby human who needs to be alerted (for example, when a human is focusing on a certain action) when the robot starts performing a task, the robot loads corresponding movement parameters for alerting and performs an alert operation within the auxiliary field of view of the human to indicate execution of the task without interfering with the action of the human. Details of an operation procedure when the robot performs a task will be described later.

The human can easily imagine respective target tasks of the robot from the movement patterns shown in Figs. 2 to 7. The robot can provide an alert without interfering with the action of the human such as watching TV by performing such an operation using the manipulator in the auxiliary field of view area without entering the stable main field of view area of the human. The human will be willing to cooperate with the task of the robot without feeling offended since the human has perceived the alert operation of the robot in the auxiliary field of view area.

### C. How to detect line of sight

Examples of a method of detecting the line of sight include a method in which the eyes of a human are photographed with a visible light camera and the line of sight is detected based on a positional relationship between a reference point "inner corner of eye" and a moving point "iris" and a method in which the eyes of a human are photographed with an infrared camera and the line of sight is detected based on a positional relationship between a reference point "corneal reflection" and a moving point "pupil."

### C-1. Implementation of device that detects line of sight

This section describes an implementation of detecting the line of sight of a human using a device external to the robot.

### (1) TV watching monitor device

Cameras such as a visible light camera and an infrared camera are installed on the TV receiver to detect the line of sight. If a camera is installed near the TV screen, the line of sight can be reliably detected by observing the face of the human from the front because the face of the human who is watching a TV show faces the screen.

The TV watching monitor device is a device that detects the line of sight of the human who is watching a TV show and further recognizes field of view areas such as a stable main field of view area and an auxiliary field of view area. The TV watching monitor device is equipped with a device for obtaining camera information (for example, an expansion board such as a video card) through which to connect to the camera. The camera and the device including the expansion board constitute the TV watching monitor device.

The positional relationship between the main body of the TV receiver and the camera can be acquired by performing calibration. For example, markers recognizable by the robot can be attached to both the main body of the TV receiver and the camera and the positional relationship can be acquired based on information that the robot has obtained by observing the markers.

The TV watching monitor device and the robot are connected together to a network. The TV watching monitor device and the robot communicate with each other, for example, using a robot operating system (ROS).

The TV watching monitor device recognizes that the TV receiver is powered on. The TV watching monitor device may recognize the power state of the TV receiver, for example, by monitoring the state of a universal serial bus (USB) terminal or an audio monitor output. Then, the TV watching monitor device detects the line of sight of a human present in an image captured by the camera when the TV receiver is powered on and further recognizes field of view areas such as a stable main field of view area and an auxiliary field of view area based on the detection result.

When the human is not focusing on watching TV, the robot does not need to perform the alert operation avoiding the stable main field of view area when performing the target task. Therefore, whether the human is focusing on watching TV may be determined based on predetermined "watching determination criteria," and when the human is not focusing on watching TV, the TV watching monitor device does not have to perform the processing of recognizing the field of view areas and notify the robot of the recognition result. The "watching determination criteria" will be described later.

### (2) Watching monitor device

The TV watching monitor device is a device that is specialized for a human who is watching a TV show and detects the line of sight of the human and recognizes the field of view areas. On the other hand, the watching monitor device is not limited to a specific situation such as watching TV and is a device that detects the line of sight of a human and recognizes the field of view areas in various situations. For example, the watching monitor device is installed on a stage of an event venue or the like to detect the line of sight of a human in each audience seat and recognize the field of view areas. The watching monitor device is also a device provided with a camera and an expansion board for connecting to the camera.

Unlike the TV watching monitor device, the watching monitor device is indefinite in its use and installation location and therefore means for searching for the current position of the device is required. For example, a marker recognizable by the robot is attached to the watching monitor device and the robot observes the position of the watching monitoring device based on information that the robot has obtained by observing the marker. Alternatively, the watching monitor device itself may be equipped with a self-position recognition function such as a simultaneous localization and mapping (SLAM) to identify its position in a room.

The TV watching monitor device takes a human who is watching TV as a detection target and the detection target is present in the field of view. On the other hand, for the watching monitor device, it is necessary to assume the case where a human to be detected is not within the field of view. Therefore, the watching monitor device may be provided with a camera swing mechanism such as that for panning (moving the direction of the camera left and right) and tilting (moving the direction of the camera up and down), a zoom mechanism, and a fisheye lens in order to keep the human to be detected within the field of view. Alternatively, a plurality of field of view monitor devices may be installed in one environment.

### C-2. Determination of watching status

This section describes determination of the watching status of the human by the TV watching monitor device and the watching monitor device described in the above section C-1. In the following description, the TV watching monitor device and the watching monitor device are collectively referred to simply as a "watching monitor device."

### (1) Watching determination criteria

The fact that the face of a human can be seen from the watching monitor device is used as a criterion for determining whether the human is watching. Even when the human is watching, it is not possible to detect the line of sight and recognize the field of view areas of the human if the face of the human cannot be seen. Even when the face of the human can be seen, it is not possible to detect the line of sight of the human if the human is sleeping with his or her eyes closed. It is clear that the human is not watching if the human's eyes are closed. If the human is not watching, the robot does not need to perform an alert operation when performing a target task. Therefore, pupil detection is performed and the fact that the eyes are open is further added to the watching determination criteria.

It is assumed that there are humans who have a habit or tendency of turning their eyes or face from time to time while watching. Therefore, the watching monitor device does not determine that, even if a human turns his or her eyes or face away from a watching target (such as a TV screen or a performer on a stage), the human has stopped watching until a predetermined time or more elapses. Thus, even if a human inadvertently performs an action based on a habit or tendency, it is determined that the human is watching and therefore the robot performs an alert operation for performing a task in the auxiliary field of view area, thus not interfering with the watching of the human.

Further, depending on the user's setting, the watching monitor device may determine that the user is not watching during a period in which a predetermined condition is satisfied (or a period which is out of a predetermined condition) such as a period in which the TV broadcasts a commercial, regardless of the detection result of the line of sight. The longer the period in which it is determined that the user is not watching, the greater the chance the robot will perform the task. Even if the robot provides an alert for performing a task, this will not interfere with the watching of the user because it is based on the watching determination result with the consent of the user.

Human actions are not limited to watching content such as TV shows. "Watching determination criteria" may be generalized to provide "criteria for determining the degree of focusing" which is used to determine whether a human is focusing on an action that the human is performing. "Criteria for determining the degree of focusing" may be defined for each type of action. It is assumed that, even if a human is performing an action which seems to be unfocused at first glance, he or she may be focusing on the action since each human has their own habit or tendency. Therefore, the definition of "criteria for determining the degree of focusing" may be changed for each human. Not only the line of sight and field of view of the human but also other biometric information (such as myoelectric potentials, brain waves, pulses, or sweating) (provided that the biometric information of the human is available) may be used when determining the degree of focusing of a human.

### (2) Determination criteria for successful alert

The robot performs an alert operation for performing a task in the auxiliary field of view area based on the results of field of view detection and field of view area recognition by the watching monitor device. If the human perceives the alert operation performed by the robot, a reaction involving the line of sight, the head, a behavior such as a movement, or the like will occur. The watching monitor device may further monitor a reaction of the human to the alert operation of the robot such as a movement of the line of sight of the human to further determine whether the alert operation is successful.

The alert operation being "successful" mentioned here corresponds to the fact that the human understood the target task of the robot from the alert operation and the alert operation was effective. If the human did not react to the alert operation and thus it was estimated that the human could not understand the target task of the robot from the alert operation, this indicates that the alert operation was not effective and "failed".

The watching monitor device may also perform machine learning on the process of recognizing the field of view areas based on situations in which the robot has performed the alert operation (such as information on content being watched, the detection result of the field of view, the recognition result of the field of view areas, a position where the alert operation has been performed, and the movement pattern for alerting) and the success/failure determination result.

### C-3. Implementation of device in which robot alone detects line of sight

In this section, an implementation of detecting the line of sight of a human with a robot alone will be described.

Generally, an automatedly operating robot is equipped with sensors such as a visible light camera for recognizing the environment. In the present embodiment, the robot detects the posture of the human from an image captured by a visible light camera mounted on the robot and calculates a rough line of sight from the detected posture. Then, the robot observes an area in the obtained line of sight and recognizes and identifies an object that the human is looking at. The robot further calculates a more accurate line of sight from the relationship between the human and the object that the human is looking at. The robot recognizes a stable main field of view area and an auxiliary field of view area of the human based on the calculated line of sight.

Of course, if the visible light camera mounted on the robot can photograph the face and eyes of the human, the field of view areas can be recognized with high accuracy by detecting the line of sight based on the positional relationship between a reference point "inner corner of eye" and a moving point "iris," similar to the watching monitor device.

### D. Device configuration

This section describes a device configuration for a robot to perform an alert operation for performing a task within the auxiliary field of view of a human.

### D-1. Device configuration in which robot alone detects field of view

Fig. 8 shows an exemplary device configuration in which a robot performs an alert operation for performing a task based on a result of field of view detection performed by the robot alone. The shown robot 800 includes a field of view detection unit 801, a manipulation unit 802, and a task determination unit 803.

The field of view detection unit 801 detects the field of view of a human to be alerted. For example, the field of view detection unit 801 detects the posture of the human from an image captured by the visible light camera mounted on the robot 800, calculates a rough line of sight from the detected posture, observes an area in the line of sight to recognize an object that the human is looking at, further calculates a more accurate line of sight from the relationship between the human and the object that the human is looking at, and recognizes a stable main field of view area and an auxiliary field of view area of the human based on the calculated line of sight as described in Section C-3. Then, the field of view detection unit 801 notifies the manipulation unit 802 of field of view information regarding the recognized stable main field of view area and auxiliary field of view area.

The task determination unit 803 determines a task to be performed by the manipulation unit 802. The task determination unit 803 determines the task based on environmental information of the robot 800 or the like. The task determination unit 803 determines, for example, a task relating to human life support such as "wiping," "informing of an incoming call," "serving," "encouraging to go for a walk," "delivering a letter," or "hydration." Then, the task determination unit 803 instructs the manipulation unit 802 to perform the determined task.

The manipulation unit 802 performs the task instructed by the task determination unit 803 to perform human life support. In the present embodiment, the manipulation unit 802 performs an alert operation, which indicates the task to be performed, on a human who is a target of life support. The manipulation unit 802 performs an alert operation such that it does not interfere with the action of the target human. That is, the manipulation unit 802 performs an alert operation within the auxiliary field of view of the target human (that is, such that the alert operation does not enter the stable main field of view area) based on the field of view information that the field of view detection unit 801 has notified of. The manipulation unit 802 is a task execution unit that performs a target task and also functions as an alert unit that indicates the task.

In the embodiment shown in Fig. 8, it is assumed that the target human is performing an action of dialogue while facing a dialogue partner. The field of view detection unit 801 calculates a rough line of sight from the posture of the human detected from an image captured by the visible light camera mounted on the robot 800, observes the dialogue partner in the line of sight to recognize the object that the human is looking at, further calculates a more accurate line of sight from the relationship between the human and the dialogue partner, and recognizes a stable main field of view area and an auxiliary field of view area of the human based on the calculated more accurate line of sight as described in Section C-3. The field of view detection unit 801 notifies the manipulation unit 802 of field of view information regarding the recognized stable main field of view area and auxiliary field of view area. Then, based on the field of view information that the field of view detection unit 801 has notified of the manipulation unit 802 performs an alert operation within the auxiliary field of view of the human who is looking at the dialogue partner such that the alert operation does not interfere with the dialogue of the human. As a result, when the human has become aware of the alert operation without the dialogue being disturbed and understood the target task of the manipulation unit 802, the human can cooperate such that the manipulation unit 802 can smoothly perform the task.

When the human is not focusing on the dialogue, the robot does not need to perform the alert operation avoiding the stable main field of view area when performing the target task. Therefore, the field of view detection unit 801 may stop recognizing the field of view areas and notifying of the field of view information upon determining that the human is not focusing on the dialogue based on a predetermined "focusing degree determination criteria." When not notified of the field of view information, the manipulation unit 802 may start performing the task without performing the alert operation to indicate the task to the human.

### D-2. Device configuration for detecting field of view in cooperation with external device

Fig. 9 shows an exemplary device configuration in which the robot performs an alert operation for performing a task based on a result of field of view detection performed in cooperation with an external device. In Fig. 9, a TV watching monitor device is assumed as an external device. The TV watching monitor device includes a camera installed near the TV screen. A TV system is composed of a combination of a TV receiver and the TV watching monitor device. The TV watching monitor device may be a device that is physically integrated with the TV receiver.

In the example shown in Fig. 9, a robot 900 includes a manipulation unit 902 and a task determination unit 903. On the other hand, a TV system 910 that cooperates with the robot includes a TV receiver 911 and a field of view detection device 912.

On the TV system 900 side, the field of view detection device 912 detects the field of view of a human who is watching a TV show displayed on the TV receiver 911. The field of view detection device 912 detects the line of sight of the human from an image of the face of the human which has been captured from the front with a camera installed near the TV screen of the TV receiver 911 and further recognizes field of view areas such as a stable main field of view area and an auxiliary field of view area as described in Section C-1. Then, the field of view detection device 912 notifies the robot 900 of field of view information regarding the recognized stable main field of view area and auxiliary field of view area. The field of view detection device 912 and the robot 900 are connected together to a network and the field of view information is exchanged, for example, using the ROS as described in Section C-1.

On the other hand, on the robot 900 side, calibration is performed to acquire the positional relationship between the main body of the TV receiver 911 and the camera of the field of view detection device 912 in advance as described in Section C-1. Then, on the robot 900 side, the field of view information received from the field of view detection device 912 can be used after being positionally transformed to field of view information in a robot coordinate system.

On the robot device 900 side, the task determination unit 903 determines a task to be performed by the manipulation unit 902. The task determination unit 903 determines the task based on environmental information of the robot 900 or the like. The task determination unit 903 determines, for example, a task relating to human life support such as "wiping," "informing of an incoming call," "serving," "encouraging to go for a walk," "delivering a letter," or "hydration." Then, the task determination unit 903 instructs the manipulation unit 902 to perform the determined task.

The manipulation unit 902 performs the task instructed by the task determination unit 903 to perform human life support. In the present embodiment, the manipulation unit 902 performs an alert operation, which indicates the task to be performed, on a human who is a target of life support. The manipulation unit 902 performs an alert operation such that it does not interfere with the action of the target human. That is, the manipulation unit 902 performs an alert operation within the auxiliary field of view of the target human (that is, such that the alert operation does not enter the stable main field of view area) based on the field of view information that the field of view detection device 912 has notified of. The manipulation unit 902 is a task execution unit that performs a target task and also functions as an alert unit that indicates the task.

In the embodiment shown in Fig. 9, it is assumed that the target human is performing an action of watching a TV show displayed on the TV receiver 911 while facing the TV screen. On the robot 900 side, field of view information received from the field of view detection device 912 is positionally transformed to field of view information in the robot coordinate system to recognize a stable main field of view area and an auxiliary field of view area of the human in the robot coordinate system. The field of view detection device 912 notifies the manipulation unit 902 of field of view information regarding the recognized stable main field of view area and auxiliary field of view area. Then, the manipulation unit 902 performs an alert operation within the auxiliary field of view of the human who is looking at the TV screen such that the alert operation does not interfere with the TV watching action of the human. As a result, when the human has become aware of the alert operation without the TV watching being disturbed and understood the target task of the manipulation unit 902, the human can cooperate such that the manipulation unit 902 can smoothly perform the task.

When the human is not focusing on watching TV, the robot does not need to perform the alert operation avoiding the stable main field of view area when performing the target task. Therefore, the field of view detection device 912 may stop recognizing the field of view areas and notifying of the field of view information upon determining that the human is not focusing on watching TV based on the "watching determination criteria" described above. When not notified of the field of view information, the manipulation unit 902 may start performing the task without performing the alert operation to indicate the task to the human.

### E. Operation flow

This section describes an operation procedure when the robot performs a task in the device configurations described in the above section D (see Figs. 8 and 9).

Fig. 10 shows an operation procedure when the robot performs a task in the form of a flowchart. Hereinafter, the operation procedure of the robot will be described with reference to the shown flowchart.

Upon starting a target task, the robot checks whether to approach a human to perform the task (step S1001).

When the target task can be performed without approaching the human (No in step S1001), the robot does not need to perform an alert operation on the human and skips the subsequent processing steps S1002 to S1012 and performs the task (step S1013).

On the other hand, when the robot needs to approach the human when performing the target task (Yes in step S1001), the robot needs to perform an alert operation on the human. In this case, the robot checks the field of view of the human (step S1002) and checks whether the human is focusing on an action such as watching TV (step S1003).

If the human is not focusing on an action such as watching TV (No in step S1003) even when the robot needs to approach the human when performing the desired task, the robot does not need to perform an alert operation on the human and skips the subsequent processing steps S1004 to S1012 and performs the task (step S1013).

If the human is focusing on an action such as watching TV (Yes in step S1003), the robot performs an alert operation to indicate to the human that the target task is to be performed.

The robot acquires information on a stable main field of view area and an auxiliary field of view area of the human in order to perform the alert operation (step S1004). Then, after loading alert operation parameters corresponding to the task (step S1005), the robot brings the alert unit into the auxiliary field of view (step S1006), further brings the alert unit closer to the stable main field of view (step S1007), and performs an alert operation of the alert unit based on the loaded alert operation (step S1008). The alert unit referred to here is a manipulation unit or a manipulation unit that has gripped a predetermined object relating to the target task.

After that, the robot checks whether it has checked whether it was able to alert the human (step S1009). Whether the human has been alerted can be checked basically based on the line of sight of the human (i.e., based on whether the user has turned toward the alert unit) and may also be checked using other biometric information (such as myoelectric potentials, brain waves, pulses, or sweating) (provided that the biometric information of the human is available).

Then, the robot checks whether the human has been successfully alerted and whether the alert unit has reached the stable main field of view (step S1010).

In step S1010, whether the human has been successfully alerted may be determined based on a result of further monitoring a reaction of the human such as a movement of the line of sight as described in Section C-2 above.

When the human has been successfully alerted, it is no longer necessary to continue the alert operation. When the alert unit has reached the stable main field of view, it is no longer possible to continue the alert operation (if the alert operation is continued, it will interfere with the action of the human). However, depending on the importance of the target task of the robot, the robot may also be allowed to enter the stable main field of view to some extent and repeat the alert operation.

When the human has not been successfully alerted but the alert unit has not yet reached the stable main field of view (No in step S1010), the robot returns to step S1007 and brings the alert unit closer to the stable main field of view and repeats the alert operation in order to further alert the human.

When the human has been successfully alerted or the alert unit has reached the stable main field of view (Yes in step S1010), the robot further checks whether the human has been successfully alerted (step S1011).

When the human has been successfully alerted (Yes in step S1011), it is considered that the human has understood the target task and thus the robot smoothly performs the task with the cooperation of the human (step S1013) and the process is terminated.

When the human has not been successfully alerted (No in step S1011), the alert unit has reached the stable main field of view range. If the alert operation is performed within the stable main field of view, it interferes with the focused action of the human (such as watching TV) and there is a risk that it is not possible to gain the human's understanding even if the robot performs the target task. Therefore, the robot postpones execution of the task at this time (step S1012) and the process is terminated.

### F. System configuration in which field of view information is integrated into environmental information

In Section D-2 above, the configuration of a robot that performs a target task in cooperation with an external device that recognizes field of view information has been described with reference to Fig. 9. In this section, the configuration of an action planning system 1100 in which field of view information obtained by recognizing the line of sight is integrated into environmental information and reflected in an action plan of the robot will be described.

Fig. 11 shows an exemplary configuration of the action planning system 1100 in which such information is reflected in an action plan of the robot. The shown action planning system 1100 includes a main body of a robot 1110 and a watching status monitoring system 1150 that cooperates with the robot 1110. The robot 1110 and the watching status monitoring system 1150 communicate with each other, for example, using an ROS. Alternatively, the robot 1110 and the watching status monitoring system 1150 may be devices that are physically integrated.

The watching status monitoring system 1150 includes a visible light camera 1151, a face recognition unit 1152, a viewpoint recognition unit 1153, and a field of view information construction unit 1154.

The visible light camera 1151 is installed at a predetermined position and captures a fixed range of fields of view. Alternatively, the visible light camera 1151 may be mounted on a swing mechanism such as that for panning (moving the direction of the camera left and right) and tilting (moving the direction of the camera up and down) to cover a wide field of view.

The face recognition unit 1152 performs a process of recognizing the face of a human present in an image captured by the visible light camera 1151. The viewpoint recognition unit 1153 performs a process of recognizing the point of view or line of sight of a human present in an image captured by the visible light camera 1151. The viewpoint recognition unit 1153 extracts the positions of a reference point "inner corner of eye" and a moving point "iris" from a facial image recognized by the face recognition unit 1152 and calculates the point of view or line of sight based on the positional relationship between the positions.

The field of view information construction unit 1154 constructs field of view information such as that of a stable main field of view and an auxiliary field of view of the human based on the facial image of the human recognized by the face recognition unit 1152 and information on the point of view or line of sight of the human recognized by the viewpoint recognition unit 1153. Then, the watching status monitoring system 1150 transmits the field of view information constructed by the field of view information construction unit 1154 to the robot 1110, for example, through communication using an ROS.

The robot 1110 includes an action planning unit 1111, an operation planning unit 1112, an environmental information management unit 1113, a whole body cooperative control unit 1114, an external information positional transformation unit 1115, a self-position integration unit 1116, an SLAM processing unit 1117, an environmental recognition unit 1118, a movement control unit 1119, an end effector 1120, a manipulation control unit 1121, a LiDAR 1122, a visible light camera 1123, a moving mechanism 1124, a tactile sensor 1125, a force sensor 1126, a gripping mechanism 1127, and a manipulator 1128. The robot 1110 shown in Fig. 11 is an example of a general configuration of a mobile robot that operates automatedly and is characterized in that field of view information received from the watching status monitoring system 1150 is incorporated into the environmental information and reflected in an action plan of the robot.

The external information positional transformation unit 1115 positionally transforms field of view information received from the watching status monitoring system 1150 to watching information in the robot coordinate system of the main body of the robot 1110 and passes it to the environmental information management unit 1113 as a watching information environmental map.

The LiDAR 1122 and the visible light camera 1123 are environmental sensors with which the robot 1110 is equipped. The robot 1110 may further be equipped with environmental sensors other than these, which are not shown because they do not directly relate to the description of the present disclosure.

The SLAM processing unit 1117 estimates the self-position of the robot 1110 and generates an environmental map based on distance information from the LiDAR 1122, image information from the visible light camera 1123, and movement information from the moving mechanism 1124. The environmental recognition unit 1118 recognizes the surrounding environment of the robot 1110 based on the distance information from the LiDAR 1122 and the image information from the visible light camera 1123.

The environmental information management unit 1113 manages a field of view information environmental map processed by the external information positional transformation unit 1115 and an obstacle map received from the environmental recognition unit 1118. The self-position integration unit 1116 performs a process of integrating the self-position estimated by the SLAM processing unit 1117 and the obstacle map managed by the environmental information management unit 1113.

The robot 1110 includes the moving mechanism 1124, the gripping mechanism 1127, and the manipulator 1128 as moving units. For example, the moving mechanism 1124 is made of a plurality of legs and wheels and can move the main body of the robot 1110. The manipulator 1128 is, for example, a robot arm having a multi-link structure. The gripping mechanism 1127 is made of a gripper or the like for gripping an object and is equipped at the tip of the manipulator 1128 as an end effector. The gripping mechanism 1127 is equipped with the tactile sensor 1125 that detects a contact force and the force sensor 1126 that detects an external force.

The action planning unit 1111 includes a robot task management unit. For example, tasks that support human life such as "wiping," "informing of an incoming call," "serving," "encouraging to go for a walk," "delivering a letter," and "hydration" are managed. The action planning unit 1111 generates an action plan for the robot 1110 to achieve a desired task based on the environmental information in which the field of view information is integrated, which is managed by the environmental information management unit 1113.

The operation planning unit 1112 generates a path plan for movement of the robot 1110 and a trajectory plan for the manipulator 1128 in order to implement the action plan generated by the action planning unit 1111.

The whole body cooperative control unit 1114 performs cooperative control of the operations of the whole body of the robot 1110, that is, of the moving mechanism 1124, the gripping mechanism 1127, and the manipulator 1128, through the movement control unit 1119, the end effector control unit 1120, and the manipulation control unit 1121 in order to implement the path plan and the trajectory plan generated by the operation planning unit 1112 based on a robot model.

### [Industrial Applicability]

The present disclosure has been described in detail with reference to specific embodiments. However, it is apparent that those skilled in the art can modify or substitute embodiments without departing from the gist of the present disclosure.

The present disclosure can be applied to various types of robots that operate automatedly in a human living space for the purpose of life support. For example, the present disclosure can be applied to legged robots, wheeled robots, and arm robots.

In short, the present disclosure has been described by way of examples and the content of the present specification should not be construed as limiting. The claims should be considered to determine the gist of the present disclosure.

The present disclosure can also have the following configurations.
(1) A control device that controls a robot, the control device including:
   an acquiring unit configured to acquire field of view information of a human; and
   a control unit configured to control an operation of an alert unit provided on the robot based on the field of view information.
(2) The control device according to the above (1), wherein the control unit is configured to control the alert unit such that the alert unit performs an alert operation to alert the human within an auxiliary field of view area of the human.
(3) The control device according to the above (1) or (2), wherein the control unit is configured to control the alert unit such that the alert unit performs an alert operation according to a target task of the robot within an auxiliary field of view area of the human.
(4) The control device according to any one of the above (1) to (3), wherein the alert unit includes a manipulator provided on the robot, and the alert operation includes an operation of the manipulator gripping a predetermined object.
(5) The control device according to the above (4), wherein the manipulator is configured to grip the object relating to a target task of the robot.
(6) The control device according to any one of the above (1) to (5), wherein the acquiring unit is configured to acquire an auxiliary field of view area of the human based on a detection result of a line of sight of the human.
(7) The control device according to any one of the above (1) to (6), wherein the control unit is configured to check an effect of the alert operation performed by the alert unit.
(8) The control device according to any one of the above (1) to (7), wherein the control unit is configured to check an effect of the alert operation performed by the alert unit based on a detection result of a line of sight of the human.
(9) The control device according to any one of the above (1) to (8), wherein the control unit is configured to control execution of a task of the robot associated with the alert operation when the alert operation performed by the alert unit is effective.
(10) The control device according to any one of the above (1) to (8), wherein the control unit is configured to repeat execution of the alert operation within an auxiliary field of view area of the human when the alert operation performed by the alert unit is not effective.
(11) The control device according to the above (10), wherein the control unit is configured to perform control such that the alert operation is performed within a stable main field of view of the human based on an importance of a task of the robot associated with the alert operation.
(12) The control device according to any one of the above (1) to (11), wherein the acquiring unit is configured to acquire the field of view information from an external device that cooperates with the robot.
(13) The control device according to any one of the above (1) to (11), wherein the acquiring unit is configured to acquire the field of view information from detection information of a sensor with which the robot is equipped.
(14) A control method of controlling a robot, the control method including:
   an acquiring step of acquiring field of view information of a human; and
   a control step of controlling an operation of an alert unit provided on the robot based on the field of view information.
(15) A computer program written in a computer-readable format to execute processing for controlling a robot on a computer, the computer program causing a computer to function as:
   an acquiring unit configured to acquire field of view information of a human; and
   a control unit configured to control an operation of an alert unit provided on the robot based on the field of view information.

### [Reference Signs List]

800 Robot
801 Field of view detection unit
802 Manipulation unit
803 Task determination unit
900 Robot
902 Manipulation unit
903 Task determination unit
910 TV system
911 TV receiver
912 Field of view detection device
1100 Action control system
1110 Robot
1111 Action planning unit
1112 Operation planning unit
1113 Environmental information management Unit
1114 Whole body cooperative control unit
1115 External information positional transformation unit
1116 Self-position integration unit
1117 SLAM processing unit
1118 Environmental recognition unit
1119 Movement control unit
1120 End effector control unit
1121 Manipulation control unit
1122 LiDAR
1123 Visible light camera
1124 Moving mechanism
1125 Tactile sensor
1126 Force sensor
1127 Gripping mechanism
1128 Manipulator
1150 Watching status monitoring system
1151 Visible light camera
1152 Face recognition unit
1153 Viewpoint recognition unit
1154 Field of view information construction unit

## Claims

1. A control device that controls a robot, the control device comprising:
an acquiring unit configured to acquire field of view information of a human; and
a control unit configured to control an operation of an alert unit provided on the robot based on the field of view information.

2. The control device according to claim 1, wherein the control unit is configured to control the alert unit such that the alert unit performs an alert operation to alert the human within an auxiliary field of view area of the human.

3. The control device according to claim 1, wherein the control unit is configured to control the alert unit such that the alert unit performs an alert operation according to a target task of the robot within an auxiliary field of view area of the human.

4. The control device according to claim 1, wherein the alert unit includes a manipulator provided on the robot, and
the alert operation includes an operation of the manipulator gripping a predetermined object.

5. The control device according to claim 4, wherein the manipulator is configured to grip the object relating to a target task of the robot.

6. The control device according to claim 1, wherein the acquiring unit is configured to acquire an auxiliary field of view area of the human based on a detection result of a line of sight of the human.

7. The control device according to claim 1, wherein the control unit is configured to check an effect of the alert operation performed by the alert unit.

8. The control device according to claim 1, wherein the control unit is configured to check an effect of the alert operation performed by the alert unit based on a detection result of a line of sight of the human.

9. The control device according to claim 1, wherein the control unit is configured to control execution of a task of the robot associated with the alert operation when the alert operation performed by the alert unit is effective.

10. The control device according to claim 1, wherein the control unit is configured to repeat execution of the alert operation within an auxiliary field of view area of the human when the alert operation performed by the alert unit is not effective.

11. The control device according to claim 10, wherein the control unit is configured to perform control such that the alert operation is performed within a stable main field of view of the human based on an importance of a task of the robot associated with the alert operation.

12. The control device according to claim 1, wherein the acquiring unit is configured to acquire the field of view information from an external device that cooperates with the robot.

13. The control device according to claim 1, wherein the acquiring unit is configured to acquire the field of view information from detection information of a sensor with which the robot is equipped.

14. A control method of controlling a robot, the control method comprising:
an acquiring step of acquiring field of view information of a human; and
a control step of controlling an operation of an alert unit provided on the robot based on the field of view information.

15. A computer program written in a computer-readable format to execute processing for controlling a robot on a computer, the computer program causing a computer to function as:
an acquiring unit configured to acquire field of view information of a human; and
a control unit configured to control an operation of an alert unit provided on the robot based on the field of view information.
